# EUROPÄISCHE PATENTANMELDUNG

(11) **EP 3 683 924 A1**
(43) Veröffentlichungstag der Anmeldung: **22.07.2020**
(21) Anmeldenummer: 19152428.9
(22) Anmeldetag: 18.01.2019
(51) Int. Cl.: H02J 9/06

(54) **ANORDNUNG ZUR UNTERBRECHUNGSFREIEN STROMVERSORGUNG UND VERFAHREN ZUM BETREIBEN EINER DERARTIGEN ANORDNUNG**

(71) Anmelder: AEG Power Solutions GmbH, 59581 Warstein-Belecke (DE)
(72) Erfinder: Cao, Zhiyu, 33104 Paderborn (DE)
(74) Vertreter: Schäperklaus, Jochen

(57) **Zusammenfassung**

Die Erfindung betrifft eine Anordnung zur unterbrechungsfreien Stromversorgung, mit einem ersten Netzanschluss (1) zur Verbindung mit wenigsten einem Außenleiter eines Versorgungsnetzes, mit einem zweiten Netzanschluss (2) zur Verbindung mit wenigsten einem Außenleiter eines Versorgungsnetzes, einem ersten Umrichter (3), mit einem Gleichstromzwischenkreis (4), einem Energiespeicher (5), mit einem zweiten Umrichter (6), mit einem ersten steuerbaren Schaltmittel (7), mit wenigstens einem Kondensator (8)und mit einem ein- oder mehrphasigen Lastanschluss (11) zur Verbindung mit einer abzusichernden Last (12), wobei
- der erste Umrichter (3) einen wechselstromseitigen Eingang aufweist, der mit dem ersten Netzanschluss (1) verbunden ist, und einen gleichstromseitigen Ausgang aufweist, der mit dem Gleichstromzwischenkreis (4) verbunden ist,
- der Energiespeicher (5) mit dem Gleichstromzwischenkreis (4) verbunden ist,
- der zweite Umrichter (6) einen gleichstromseitigen Eingang aufweist, der mit dem Gleichstromzwischenkreis (4) verbunden ist, und einen ein- oder mehrphasigen wechselstromseitigen Ausgang aufweist, der mit dem Lastanschluss (11) verbunden ist,
- das erste Schaltmittel (7) einerseits mit dem zweiten Netzanschluss (2) und andererseits mit dem Lastanschluss (11) verbunden ist,
- im Falle eines einphasigen wechselstromseitigen Ausgangs des zweiten Umrichters (6) der Kondensator (8) an einen ersten Anschluss und einen zweiten Anschluss des wechselstromseitigen Ausgangs des zweiten Umrichters (6) angeschlossen ist oder im Falle eines mehrphasigen wechselstromseitigen Ausgangs des zweiten Umrichters (6) je Phase ein Kondensator (8) vorgesehen ist und diese Kondensatoren (8) im Polygon oder im Dreieck geschaltet sind und
- die Anordnung ein zweites steuerbares Schaltmittel (13) aufweist, das im Falle eines einphasigen wechselstromseitigen Ausgangs des zweiten Umrichters (6) ein zweipoliges Schaltmittel ist und im Falle eines mehrphasigen wechselstromseitigen Ausgangs des zweiten Umrichters (6) ein mehrpoliges Schaltmittel ist, mit dem ein Strompfad durch den Kondensator (8) oder die Kondensatoren (8) unterbrochen werden kann.

## Beschreibung

Die vorliegende Erfindung betrifft eine Anordnung zur unterbrechungsfreien Stromversorgung, mit einem ersten Netzanschluss zur Verbindung mit wenigsten einem Außenleiter eines Versorgungsnetzes, mit einem zweiten Netzanschluss zur Verbindung mit wenigsten einem Außenleiter eines Versorgungsnetzes, einem ersten Umrichter, mit einem Gleichstromzwischenkreis, einem Energiespeicher, mit einem zweiten Umrichter, mit einem ersten steuerbaren Schaltmittel, mit wenigstens einem Kondensator und mit einem ein- oder mehrphasigen Lastanschluss zur Verbindung mit einer abzusichernden Last, wobei
- der erste Umrichter einen wechselstromseitigen Eingang aufweist, der mit dem Netzanschluss verbunden ist, und einen gleichstromseitigen Ausgang aufweist, der mit dem Gleichstromzwischenkreis verbunden ist,
- der Energiespeicher mit dem Gleichstromzwischenkreis verbunden ist,
- der zweite Umrichter einen gleichstromseitigen Eingang aufweist, der mit dem Gleichstromzwischenkreis verbunden ist, und einen ein- oder mehrphasigen wechselstromseitigen Ausgang aufweist, der mit dem Lastanschluss verbunden ist,
- das erste Schaltmittel einerseits mit dem zweiten Netzanschluss und andererseits mit dem Lastanschluss verbunden ist und
- im Falle eines einphasigen wechselstromseitigen Ausgangs des zweiten Umrichters (6) der Kondensator an einen ersten Anschluss und einen zweiten Anschluss des wechselstromseitigen Ausgangs des zweiten Umrichters (6) angeschlossen ist oder im Falle eines mehrphasigen wechselstromseitigen Ausgangs des zweiten Umrichters (6) je Phase ein Kondensator (8) vorgesehen ist und diese Kondensatoren (8) im Polygon oder im Dreieck geschaltet sind.

Eine solche Anordnung ist zur unterbrechungsfreien frequenz- und spannungsunabhängigen Stromversorgung der abzusichernden Last vorgesehen. Bei einer USV dieser Kategorie ist der Netzanschluss auf den ersten Umrichter geführt, der die Netzspannung gleichrichtet und den Energiespeicher speist. Der Lastanschluss wird von dem zweiten Umrichter versorgt, der bei vorhandener und ausreichender Spannung am Netzanschluss die notwendige Energie über den ersten Umrichter bezieht. Bei einem Teilausfall des Netzes oder bei einem Netzausfall wird der Lastanschluss vollständig oder teilweise aus dem Energiespeicher versorgt. Die Wechselspannung am Lastanschluss wird in jedem Fall - unabhängig von der Netzspannung - über den zweiten Umrichter aus dem Gleichspannungszwischenkreis durch Wechselrichten erzeugt.

Zur Erhöhung der Versorgungssicherheit verfügt eine solche unterbrechungsfreie Stromversorgung über eine über das erste Schaltmittel geführte, so genannte Bypass-Schaltung, die parallel dem Zweig über die Umrichter geschaltet ist. Bei Überlasten am Lastanschluss oder Auftreten eines internen Fehlers im Umrichter-Zweig wird der angeschlossene Verbraucher bei ungestörter Versorgung aus dem Netz "unterbrechungsfrei" auf diesen Bypass-Zweig umgeschaltet und somit weiter aus dem Netz versorgt.

Sowohl bei der Gleichrichtung im ersten Umrichter als auch bei der Wechselrichtung im zweiten Umrichter treten Verluste auf. In den Produktbeschreibungen von USV-Anordnungen ist in der Regel der Wirkungsgrad bei voller Last angegeben. Da die meisten USV-Anordnungen aber nicht voll ausgelastet eingesetzt werden, sind die in der Regel niedrigeren Wirkungsgrade bei Teillast für die korrekte Berechnung des Stromverbrauchs und die Kosten entscheidend.

Einige Anwender vermeiden die Verluste, die bei einer Versorgung aus dem Netz durch die Gleich- und Wechselrichtung entstehen, dadurch, dass sie womöglich entgegen dem Sinn einer unterbrechungsfreien frequenz- und spannungsunabhängigen Stromversorgung die Versorgung über den Bypass vornehmen und erst bei einer Störung der Versorgung über den Bypass auf eine Versorgung über den zweiten Umrichter umschalten.

Ganz gleich aus welchem Grund die Versorgung über den Bypass-Zweig erfolgt: Die Versorgung über den Bypass-Zweig hat einen entscheidenden Nachteil, der daraus herrührt, dass der Lastausgang mit dem Kondensator verbunden ist, der zur Filterung bei Betrieb des zweiten Umrichters vorgesehen ist.

Erfolgt die Versorgung über den Bypass-Zweig ist der Kondensator parallel zur Last angeordnet, wodurch eine hohe Blindleistung notwendig ist, was nicht erwünscht ist.

Hier setzt die Erfindung an.

Erfindungsgemäß wird vorgeschlagen, dass die Anordnung ein zweites steuerbares Schaltmittel aufweist, das im Falle eines einphasigen wechselstromseitigen Ausgangs des zweiten Umrichters ein zweipoliges Schaltmittel ist und im Falle eines mehrphasigen wechselstromseitigen Ausgangs des zweiten Umrichters ein mehrpoliges Schaltmittel ist, mit dem ein Strompfad durch den Kondensator oder die Kondensatoren unterbrochen werden kann.

Bei einer Versorgung der Last über den Bypass kann dann durch ein Öffnen des zweiten Schaltermittels der Strompfad über den oder die Kondensatoren unterbrochen werden. Der Strom über den Bypass kann dann nur zur Last abfließen. Bei einer Versorgung über den zweiten Umrichter hingegen, ist das erste Schaltmittel geöffnet und das zweite Schaltmittel geschlossen. Der Kondensator kann dann als Filter wirken.

Es ist möglich, dass das zweite Schaltmittel eine Einschaltverzögerung hat. Das kann dann dazu führen, dass der Kondensator nicht sofort dann als Filter wirken kann, wenn die Stromversorgung über den zweiten Umrichter aufgenommen wird. Das führt bei einer Versorgung der Last über den zweiten Umrichter während der Einschaltverzögerung zu einer signifikant hohen gesamten harmonischen Verzerrung (THD) des Stroms (THDi) und der Spannung (THDu). Diese macht sich durch hohe Rippel im Strom- und Spannungsverlauf bemerkbar, die bei wirkendem Kondensator reduziert würden.

Gemäß der Erfindung kann man dem Anstieg der Verzerrung dadurch entgegenwirken, dass der zweite Umrichter in einem Wechselrichterbetrieb mit einer ersten Schaltfrequenz betrieben werden kann, die höher ist als die Nennfrequenz des Versorgungsnetzes, vorzugsweise ein Vielfaches höher ist als diese Nennfrequenz, und mit einer zweiten Schaltfrequenz betrieben werden kann, die höher ist als die erste Schaltfrequenz, vorzugsweise ein Vielfaches höher ist als diese erste Schaltfrequenz.

Der zweite Umrichter wird vorzugsweise mit einem PWM-Signal angesteuert, dessen Takt durch die erste Schaltfrequenz vorgegeben ist. Wird die zweite Schaltfrequenz gewählt, ist der Takt des PWM-Signals entsprechend der zweiten Schaltfrequenz vorgegeben.

Durch das Erhöhen der Schaltfrequenz auf die zweite Schaltfrequenz können die Rippel im Strom- und Spannungsverlauf deutlich reduziert werden. Das wird aber auf Kosten einer Verschlechterung des Wirkungsgrades des zweiten Umrichters erreicht. Der zweite Umrichter produziert aufgrund der Erhöhung der Schaltfrequenz mehr Wärme, was bei unterbrochenem längerem Betrieb mit der zweiten Schaltfrequenz zu einer thermischen Schädigung von im zweiten Umrichter verwendeten Bauelementen führen könnte. Da aber der Betrieb mit der zweiten Schaltfrequenz nur kurzzeitig während der Einschaltverzögerung und zudem noch bei zunächst kalten Bauelementen erfolgt, die keine Betriebstemperatur haben, führt die Erhöhung der Schaltfrequenz zu keinen Schäden am zweiten Umrichter.

Eine erfindungsgemäße Anordnung kann eine Steuerung aufweisen, mit welcher zumindest der zweite Umrichter und das zweite steuerbare Schaltmittel steuerbar ist und zwar derart, dass das zweite Schaltmittel geöffnet ist, wenn das erste Schaltmittel geschlossen ist und, dass das zweite Schaltmittel geschlossen ist, wenn eine Stromversorgung über den zweiten Umrichter erfolgt.

Das erste Schaltmittel kann ein Halbleiterschalter, insbesondere ein Thyristor sein, der nur eine sehr kurze Schaltverzögerung hat.

Das zweite Schaltmittel kann dagegen ein Relais, insbesondere ein Halbleiter-Relais oder ein elektromechanisches Relais sein, das im Vergleich zum ersten Schaltmittel eine hohe Einschaltverzögerung hat.

Weitere Merkmale und Vorteile der vorliegenden Erfindung werden anhand der nachfolgenden Beschreibung eines bevorzugten Ausführungsbeispiels unter Bezugnahme auf die Zeichnung dargestellt. Es zeigt:

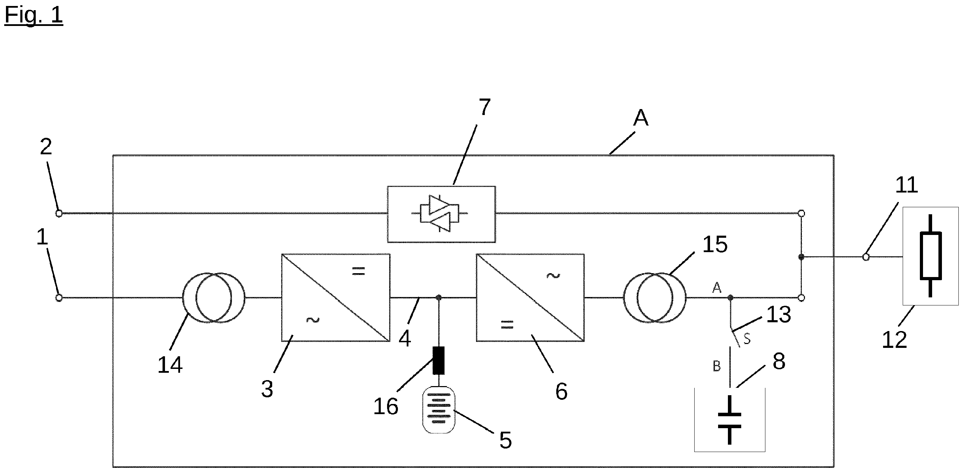

- Fig. 1: Blockschaltbild einer erfindungsgemäßen Anordnung zur unterbrechungsfreien Stromversorgung.

Die erfindungsgemäße Anordnung A zur unterbrechungsfreien Stromversorgung kann eine abzusichernde Last 12 unabhängig von der Spannung und der Frequenz in einem Netz, das an einen Netzanschluss 1 der Anordnung A angeschlossen ist, versorgen. Das Netz und der Netzanschluss können ein- oder mehrphasig ausgeführt sein.

Dazu weist die Anordnung A optional einen Transformator 14 oder eine Drossel auf, die mit einem ersten Anschluss an den Netzanschluss 1 angeschlossen sind und die einen zweiten Anschluss aufweisen, an den ein wechselstromseitiger Eingang eines ersten ein- oder mehrphasigen Umrichters 3 angeschlossen ist. Ein gleichstromseitiger Ausgang des ersten Umrichters 3 ist mit einem Gleichstromzwischenkreis 4 verbunden. Bei dem ersten Umrichter 3 könnte es sich um einen bidirektionalen Umrichter handeln. Im dargestellten Beispiel ist der erste Umrichter 3 allerdings als Gleichrichter ausgeführt.

An den Gleichstromzwischenkreis 4 ist über eine Drossel 16 eine Batterie 5 als Energiespeicher angeschlossen. Außerdem ist ein gleichstromseitiger Eingang eines zweiten Umrichters 6 mit dem Gleichstromzwischenkreis 4 verbunden. Ein ein- oder mehrphasiger wechselstromseitiger Ausgang des zweiten Umrichters 6 ist über einen Transformator 15 oder eine Drossel mit einem ein- oder mehrphasigen Lastausgang 11 der Anordnung A verbunden. An den Lastausgang 11 ist die abzusichernde Last 12 angeschlossen.

Der Lastausgang 11 ist über einen Halbleiterschalter 7 mit einem zweiten Netzeingang 2 verbunden. An diesem zweiten Netzeingang 2 kann das gleiche Netz angeschlossen sein wie an dem ersten Netzeingang 1, es könnte aber auch ein zweites Versorgungsnetz mit dem zweiten Netzeingang 2 verbunden sein.

Der ein- oder mehrphasige Lastanschluss 11 ist über ein Relais 13 mit einem Kondensator 8 verbunden. Der Kondensator ist im Falle des einphasigen Lastanschlusses 11 über das dann zweipolig ausgeführte Relais 13 an einen ersten Anschluss und einen zweiten Anschluss des wechselstromseitigen Ausgangs des zweiten Umrichters 6 angeschlossen. Im Falle eines mehrphasigen wechselstromseitigen Ausgangs des zweiten Umrichters 6 und einem mehrphasigen Lastanschluss ist je Phase ein Kondensator 8 vorgesehen. Diese Kondensatoren 8 sind im Polygon oder im Dreieck zwischen den Phasen des Lastanschlusses 11 geschaltet. Durch das dann mehrpolig ausgeführte Relais 13 sind die Kondensatoren mit den Phasen verbunden, so dass die Strompfade durch die Kondensatoren durch das Relais 13 unterbrochen werden können.

Die an den Lastanschluss 11 angeschlossene kritische Last 12 kann auf verschiedene Wege aus den Versorgungsnetzen versorgt werden, die an die Netzanschlüsse 1 und 2 angeschlossen sind.

Ein erster Weg führt vom ersten Netzanschluss 1 über den ersten Transformator 14, den ersten Umrichter 3, den Gleichstromzwischenkreis 4, den zweiten Umrichter 6, den zweiten Transformator 15 zum Lastanschluss 11. Dieser Weg ist vorgesehen, wenn am ersten Netzanschluss 1 eine ausreichende Spannung anliegt und die Komponenten der Anordnung A auf diesem Weg ordnungsgemäß arbeiten. Damit auf diesem ersten Weg eine Spannungsversorgung möglich ist, muss die vom ersten Transformator 14 transformierte Netzspannung am ersten Netzanschluss 1 vom ersten Umrichter 3 gleichgerichtet werden und in den Gleichstromzwischenkreis 4 eingespeist werden. Der zweite Umrichter 6 entnimmt elektrische Energie aus dem Gleichstromzwischenkreis 4 und versorgt damit den zweiten Transformator 15, der mit dem Lastanschluss 11 verbunden ist.

Ein zweiter Weg führt vom zweiten Netzanschluss 2 über den Halbleiterschalter 7 zum Lastanschluss 11. Dieser Weg ist für den Fall vorgesehen, in dem die Komponenten auf dem ersten Weg nicht ordnungsgemäß arbeiten und am zweiten Netzanschluss 2 eine ausreichende Spannung anliegt. Damit auf diesem zweiten Weg eine Spannungsversorgung möglich ist, muss der Halbleiterschalter 7 geschlossen sein.

Eine gleichzeitige Versorgung der Last 12 über den ersten und den zweiten Weg ist möglich.

In Abhängigkeit von der Last 12 muss die Last im störungsfreien Normalbetrieb über den ersten Weg versorgt werden. Das ist notwendig, wenn es sich um eine kritische Last handelt. Eine Versorgung über den zweiten Weg ist unter diesen Umständen nur dann zugelassen, wenn eine Versorgung über den ersten Weg nicht möglich ist, zum Beispiel weil einzelne Komponenten auf dem ersten Weg nicht ordnungsgemäß arbeiten.

Sollte in dem Fall einer solchen kritischen Last 12 dagegen die Spannung am ersten Netzanschluss nicht ausreichend sein, wird die Last 12 über den zweiten Transformator 15, den zweiten Umrichter 6 und die Drossel 16 aus der Batterie 5 versorgt.

Bei anderen, weniger kritischen Lasten, ist es jedoch nicht notwendig, dass diese spannungs- und frequenzunabhängig versorgt werden. Die Last kann dann über den zweiten Weg mit elektrischer Energie versorgt werden, was zum Vorteil hat, dass weder im ersten Umrichter 3 noch im zweiten Umrichter 6 wegen der Versorgung der Last 12 Verluste auftreten. Über den ersten Umrichter 3 kann dann die Batterie 5 geladen werden, während der zweite Umrichter 6 ausgeschaltet ist.

Erfolgt eine Stromversorgung über den zweiten Weg, ist das Relais 13 so angesteuert, dass der Strompfad über den Kondensator 8 bzw. die Kondensatoren 8 unterbrochen ist. Dann ist verhindert, dass ein Strom von dem zweiten Netzanschluss 2 über den Halbleiterschalter 7 und den Kondensator 8 fließt, was zu einer zum Teil erheblichen Blindleistungsaufnahme führte.

Erfolgt dagegen eine Stromversorgung über den ersten Weg oder aus der Batterie 5, ist das Relais 13 so angesteuert, dass der Strompfad über den Kondensator 8 oder die Kondensatoren 8geschlossen ist. Die dann vom eingeschalteten zweiten Umrichter 6 gelieferte elektrische Spannung kann dann mittels des Kondensators 8 oder der Kondensatoren 8 gefiltert werden. Die Verzerrungsleistung kann dadurch reduziert werden.

Aufgrund einer Einschaltverzögerung des Relais 13 kann es nun dazu kommen, dass nach dem Einschalten des zweiten Umrichters 6 (und dem gleichzeitigen Öffnen des Halbleiterschalters 7) der Strompfad über den Kondensator 8 noch nicht geschlossen ist, wenn der zweite Umrichter 6 beginnt Spannung an seinem Ausgang zu liefern. Eine Filterung zum Zweck der Reduzierung der Verzerrungsleistung erfolgt dann kurzzeitig nicht. Dem Effekt der erhöhten Verzerrungsblindleistung kann entgegengewirkt werden, dadurch dass für den Zeitraum der Einschaltverzögerung die Schaltfrequenz des zweiten Umrichters 6 erhöht wird. Durch die Erhöhung der Schaltfrequenz, nämlich der Taktfrequenz der Pulsweitenmodulation, kann eine Reduzierung der Verzerrungsleistung erreicht werden. Das geht zwar auf Kosten einer erhöhten Wärmeentwicklung im zweiten Umrichter 6, die allerdings verkraftet werden kann, da sie nur kurzzeitig anhält und auch in einem Zustand beginnt, indem die Bauelemente des zweiten Umrichters kalt sind, also keine Betriebstemperatur haben. Sobald der Strompfad über den Kondensator 8 geschlossen ist, wird die Schaltfrequenz des zweiten Umrichters 6 wieder auf die normale Schaltfrequenz herabgesetzt.

## Patentansprüche

1. Anordnung zur unterbrechungsfreien Stromversorgung, mit einem ersten Netzanschluss (1) zur Verbindung mit wenigsten einem Außenleiter eines Versorgungsnetzes, mit einem zweiten Netzanschluss (2) zur Verbindung mit wenigsten einem Außenleiter eines Versorgungsnetzes, einem ersten Umrichter (3), mit einem Gleichstromzwischenkreis (4), einem Energiespeicher (5), mit einem zweiten Umrichter (6), mit einem ersten steuerbaren Schaltmittel (7), mit wenigstens einem Kondensator (8) und mit einem ein- oder mehrphasigen Lastanschluss (11) zur Verbindung mit einer abzusichernden Last (12), wobei
- der erste Umrichter (3) einen wechselstromseitigen Eingang aufweist, der mit dem ersten Netzanschluss (1) verbunden ist, und einen gleichstromseitigen Ausgang aufweist, der mit dem Gleichstromzwischenkreis (4) verbunden ist,
- der Energiespeicher (5) mit dem Gleichstromzwischenkreis (4) verbunden ist,
- der zweite Umrichter (6) einen gleichstromseitigen Eingang aufweist, der mit dem Gleichstromzwischenkreis (4) verbunden ist, und einen ein- oder mehrphasigen wechselstromseitigen Ausgang aufweist, der mit dem Lastanschluss (11) verbunden ist,
- das erste Schaltmittel (7) einerseits mit dem zweiten Netzanschluss (2) und andererseits mit dem Lastanschluss (11) verbunden ist und
- im Falle eines einphasigen wechselstromseitigen Ausgangs des zweiten Umrichters (6) der Kondensator (8) an einen ersten Anschluss und einen zweiten Anschluss des wechselstromseitigen Ausgangs des zweiten Umrichters (6) angeschlossen ist oder im Falle eines mehrphasigen wechselstromseitigen Ausgangs des zweiten Umrichters (6) je Phase ein Kondensator (8) vorgesehen ist und diese Kondensatoren (8) im Polygon oder im Dreieck geschaltet sind,
**dadurch gekennzeichnet, dass**
die Anordnung ein zweites steuerbares Schaltmittel (13) aufweist, das im Falle eines einphasigen wechselstromseitigen Ausgangs des zweiten Umrichters (6) ein zweipoliges Schaltmittel ist und im Falle eines mehrphasigen wechselstromseitigen Ausgangs des zweiten Umrichters (6) ein mehrpoliges Schaltmittel ist, mit dem ein Strompfad durch den Kondensator (8) oder die Kondensatoren (8) unterbrochen werden kann.

2. Anordnung nach Anspruch 1, **dadurch gekennzeichnet, dass** der zweite Umrichter (6) in einem Wechselrichterbetrieb mit einer ersten Schaltfrequenz betrieben werden kann, die höher ist als die Nennfrequenz des Versorgungsnetzes, vorzugsweise ein Vielfaches höher ist als diese Nennfrequenz, und mit einer zweiten Schaltfrequenz betrieben werden kann, die höher ist als die erste Schaltfrequenz, vorzugsweise ein Vielfaches höher ist als diese erste Schaltfrequenz.

3. Anordnung nach Anspruch 1 oder 2, **dadurch gekennzeichnet, dass** die Anordnung eine Steuerung aufweist, mit welcher zumindest der zweite Umrichter (6) und das zweite steuerbare Schaltmittel (13) steuerbar ist und zwar derart, dass das zweite Schaltmittel (13) geöffnet ist, wenn das erste Schaltmittel (7) geschlossen ist und, dass das zweite Schaltmittel (13) geschlossen ist, wenn eine Stromversorgung über den zweiten Umrichter (6) erfolgt.

4. Anordnung nach einem der Ansprüche 1 bis 3, **dadurch gekennzeichnet, dass** das zweite Schaltmittel (13) eine Einschaltverzögerung hat.

5. Anordnung nach Anspruch 2, **dadurch gekennzeichnet, dass** mit der Steuerung der zweite Umrichter (6) während der Einschaltverzögerung mit der zweiten Schaltfrequenz betrieben wird.

6. Anordnung nach einem der Ansprüche 1 bis 5, **dadurch gekennzeichnet, dass** das erste Schaltmittel (7) ein Halbleiterschalter, insbesondere ein Thyristor ist.

7. Anordnung nach einem der Ansprüche 1 bis 6, **dadurch gekennzeichnet, dass** das zweite Schaltmittel (13) ein Relais, insbesondere ein Halbleiter-Relais oder ein elektromechanisches Relais ist.

8. Verfahren zum Betreiben einer Anordnung zur unterbrechungsfreien Stromversorgungseinrichtung nach einem der Ansprüche 1 bis 7, **dadurch gekennzeichnet, dass** nach einem Öffnen und während des Schließens der zweite Umrichter (6) mit der zweiten Schaltfrequenz betrieben wird und nach dem vollständigen Schließen des zweiten Schaltmittels (13) der zweite Umrichter (6) mit der ersten Schaltfrequenz betrieben wird.
